# EUROPÄISCHE PATENTSCHRIFT

(11) **EP 3 371 009 B1**
(45) Veröffentlichungstag und Bekanntmachung des Hinweises auf die Patenterteilung: **31.07.2019**
(21) Anmeldenummer: 16766517.3
(22) Anmeldetag: 09.09.2016
(51) Int. Cl.: B60R 16/03, H02J 7/14, H01B 9/00, H01B 9/02, H01B 7/00

(54) **MEHRSPANNUNGSBORDNETZSYSTEM SOWIE SPANNUNGSEBENEN - ÜBERGREIFENDES MULTILAYERKABEL**
MULTI-VOLTAGE ONBOARD ELECTRIC SYSTEM AND MULTILAYER CABLE FOR DIFFERENT VOLTAGE LEVELS
SYSTÈME DE RÉSEAU DE BORD MULTI-TENSION ET CÂBLE MULTICOUCHE À NIVEAUX DE TENSION MULTIPLES

(30) Priorität: 04.11.2015 DE 102015118921
(43) Veröffentlichungstag der Anmeldung: 12.09.2018
(73) Patentinhaber: Auto-Kabel Management GmbH, 79688 Hausen i.W. (DE)
(72) Erfinder: TAZARINE, Wacim, 41812 Erkelelenz (DE); RAFATI, Sohejl, 41236 Mönchengladbach (DE); GRONWALD, Frank, 50181 Bedburg (DE)
(74) Vertreter: Cohausz & Florack
(86) Internationale Anmeldenummer: PCT/EP2016/071271
(87) Internationale Veröffentlichungsnummer: WO 2017/076535

(56) Entgegenhaltungen:
- WO-A1-2006/082238
- WO-A1-2014/076476
- DE-A1- 4 441 268
- DE-A1-102012 200 979
- DE-A1-102013 016 073
- JP-A- 2011 113 928
- JP-A- 2011 146 237
- JP-A- 2011 150 849

## Beschreibung

Die Anmeldung betrifft ein Mehrspannungsbordnetzsystem für Kraftfahrzeuge sowie ein Spannungsebenen - übergreifendes Multilayerkabel für den Einsatz in Mehrspannungsbordnetzen von Kraftfahrzeugen.

Aufgrund der stetig wachsenden Anforderungen an Kraftstoffeffizienz, Komfort und Zuverlässigkeit in der heutigen Automobiltechnologie erweist sich das herkömmliche 12 V-Kraftfahrzeugbordnetz nicht mehr als zeitgemäß. Die ständige Zunahme der Anzahl an elektrischen Verbrauchern, die permanente Forderung nach Gewichtsreduzierung sowie die Gewährleistung einer zuverlässigen und langfristigen Energieversorgung sind durch das 12 V-Kraftfahrzeugbordnetz nicht mehr zu leisten.

Durch die zusätzliche Einführung mindestens einer weiteren Spannungsebene von beispielsweise 48 V ist dieses Problem lösbar. Durch die Anhebung der Systemspannung wird der Wirkungsgrad bei der Leistungsverteilung im Fahrzeug aufgrund des verringerten Stromes und der damit reduzierten ohmschen Verluste grundsätzlich verbessert. Dabei sind heutige Mehrspannungsbordnetze für Kraftfahrzeuge so konzipiert, dass die 12 V-Spannungsebene ausschließlich Verbraucher versorgt, welche wenig Leistung benötigen, wohingegen die 48 V-Spannungsebene alle Kraftfahrzeugverbraucher versorgt, die kurzzeitig viel Leistung benötigen.

Die zusätzliche Einführung der 48 V-Spannungsebene ist allerdings mit einigen Nachteilen verbunden. So besteht eine Kurzschlussgefahr zwischen der 48 V und der 12 V-Spannungsebene, die zur Zerstörung sämtlicher nur für die 12 V-Spannungsebene ausgelegten Verbraucher des Kraftfahrzeugs führen kann. Zudem treten bei einer Spannung von 48 V im Gegensatz zur 12 V-Spannung stabile Lichtbögen auf, die ebenso wie ein Kurzschluss durch lokale Überhitzung einen Fahrzeugbrand verursachen können. Folglich sind bei der Verwendung von Mehrspannungsbordnetzen für Kraftfahrzeuge mit höheren Spannungsebenen äußerst aufwendige Maßnahmen zur Senkung des Brandrisikos erforderlich. Ein weiterer Nachteil bezüglich der zusätzlichen Einführung der 48 V-Spannungsebene besteht in der Zunahme der elektromagnetischen Kopplungen im Kraftfahrzeugbordnetz, was zu einer Abnahme der elektromagnetischen Verträglichkeit führt. Insbesondere dort, wo ein hoher Qualitätsanspruch an die Datenübertragung gestellt wird, ist das ein großes sicherheitsrelevantes Problem. Um diese Nachteile, die mit der Einführung eines Mehrspannungsbordnetzes für Kraftfahrzeuge verbunden sind zu bewältigen, werden hohe Anforderungen an die Struktur des Kraftfahrzeugbordnetzes sowie an die verwendeten Energie - und Signalkabel gestellt.

DE 10 2013 016 073 A1 offenbart eine Vorrichtung zur Signalübertragung in einem Fahrzeug.

Daher liegt dem Gegenstand die technische Aufgabe zugrunde, ein Mehrspannungsbordnetzsystem für Kraftfahrzeuge zur Verfügung zu stellen, das die Wahrscheinlichkeit des Auftretens von Kurzschlüssen zwischen den verschiedenen Spannungsebenen des Kraftfahrzeugbordnetzes sowie das Auftreten von Lichtbögen unter Berücksichtigung der elektromagnetischen Verträglichkeit des Kraftfahrzeugbordnetzes minimiert.

Zur Lösung dieser Aufgabe wird ein Mehrspannungsbordnetzsystem für Kraftfahrzeuge mit zumindest drei in ihrer Längsrichtung im Wesentlichen parallel zueinander verlaufenden Flachleitungen sowie zumindest zwei Spannungsquellen vorgeschlagen, wobei eine erste der Flachleitungen mit einem ersten Pol einer ersten der Spannungsquellen elektrisch leitend verbunden ist, eine zweite der Flachleitungen mit einem ersten Pol einer zweiten der Spannungsquellen elektrisch leitend verbunden ist und eine dritte der Flachleitungen mit einem zweiten Pol der ersten und der zweiten Spannungsquelle elektrisch leitend verbunden ist und die dadurch gekennzeichnet ist, dass die dritte Flachleitung zwischen zumindest der ersten und der zweiten Flachleitung angeordnet ist.

Aufgrund der bekannten materialtechnischen Vorteile gegenüber den ursprünglich als Energieleiter in der Automobilindustrie verwendeten Rundleitungen werden in dem gegenständlichen Mehrspannungsbordnetzsystem Flachleitungen aus Vollmaterial eingesetzt. Hierbei weisen die gegenständlich einstückig ausgeführten Flachleitungen eine Mindestschichtdicke von 1,5 mm, bevorzugt eine Mindestschichtdicke von 5 mm, insbesondere eine Mindestschichtdicke von über 5 mm auf. Nicht gemeint sind mit Flachleitungen damit so genannte Folienleiter.

Die verwendeten Flachleitungen aus Vollmaterial weisen gegenüber Rundleitungen eine niedrigere Bauhöhe und damit ein geringeres Gewicht und einen geringeren Bauraumbedarf auf. Bei gleicher Stromtragfähigkeit eignen sich Flachleitungen entsprechend ihres günstigen Verhältnisses der Oberfläche zum Volumen und der damit verbundenen besseren Wärmeabstrahlung deutlich besser für die Energieübertragung als Rundleitungen. Angesichts eines geringeren Montageaufwands sowie einer niedrigeren Fehleranfälligkeit bezüglich der Verlegung und Verbindung einzelner Leitungen ist es vorteilhaft Flachleitungen zu Multilayerkabeln zusammenzufassen. Die Verwendung von Multilayerkabeln aus Flachleitungen bietet sich insbesondere bei Mehrspannungsbordnetzen für Kraftfahrzeuge an, da dort für jede Spannungsebene eigene Energieleitungen durch die Karosserie geführt werden müssen.

Die elektrischen Verbindungen zwischen den Flachleitungen und den Spannungsquellen oder zwischen einzelnen Flachleitungen werden bevorzugt über lösbare Verbindungen wie Klemmen, Steckverbinder oder Kabelschuhe gebildet, können aber auch unlösbar gebildet sein.

Bei den verwendeten Spannungsquellen kann es sich um Batterien, Kondensatoren, Generatoren, Transformatoren oder auch Brennstoffzellen handeln. Bevorzugt handelt es sich dabei um Batterien, insbesondere Blei-Akkumulatoren, Li-Ionen-Akkumulatoren, Zink-Luft- Akkumulatoren oder Aluminium-Luft-Akkumulatoren.

Es wird vorgeschlagen, dass die erste der Flachleitungen über die Pole einer ersten der Spannungsquellen eine höhere elektrische Potentialdifferenz abgreift, als die zweite der Flachleitungen über die Pole einer zweiten der Spannungsquellen. Bevorzugt greift eine erste der Flachleitungen eine elektrische Potentialdifferenz von 24 V, besonders bevorzugt von 48 V ab, während eine zweite der Flachleitungen bevorzugt eine elektrische Potentialdifferenz von 12 V abgreift. Eine über Flachleitungen des Kraftfahrzeugbordnetzes geführte Spannungsebene von 12 V kann idealerweise zur Spannungsversorgung von Fahrzeugverbrauchern genutzt werden, die einen geringen Leistungsbedarf aufweisen. Durch den deutlich höheren Wirkungsgrad bei der Wechselrichtung kann eine über Flachleitungen des Kraftfahrzeugbordnetz geführte Spannungsebene von 48 V dagegen idealerweise für die Versorgung von Fahrzeugverbrauchern genutzt werden, die kurzzeitig einen hohen Leistungsbedarf haben, wie der Starter, oder Systeme zur Steigerung der Energieeffizienz wie die Bremsenergie-Rückgewinnung, Start-Stopp-Systeme, Wankstabilisatoren oder Hybrid-Systeme.

Es sei darauf hingewiesen, dass im Folgenden gleichbedeutend mit der elektrischen Potentialdifferenz der Begriff der elektrischen Spannung verwendet wird, die zwischen den beiden Polen einer Spannungsquelle abgegriffen werden kann.

Aufgrund des geringeren Verkabelungsaufwands und der erheblichen Gewichtsreduktion dient in heutigen Kraftfahrzeugbordnetzen gängigerweise die Karosserie als Masserückleiter bzw. Masserückführung. Gegenständlich wird dagegen vorgeschlagen, nicht die Karosserie, sondern eine separate Flachleitung als Masserückleiter zu verwenden. Hierzu wird vorgeschlagen, die Masse über eine dritte Flachleitung zurückzuführen, welche zwischen der ersten und der zweiten Flachleitung angeordnet ist. Über diese Art der Masserückführung wird nicht nur die kapazitive und induktive Kopplung minimiert und somit die elektromagnetische Verträglichkeit (EMV) des Kraftfahrzeugbordnetzes verbessert, sondern auch die Wahrscheinlichkeit eines Kurzschlusses zwischen den verschiedenen Spannungsebenen des Kraftfahrzeugbordnetzes minimiert. Darüber hinaus ist im Falle eines Kurzschlusses der ersten oder zweiten Flachleitung mit der die Masse rückführenden dritten Flachleitung eine rasche und einfache Kurzschlusserkennung möglich.

Eine Masserückführung über eine separate Flachleitung eignet sich zudem besonders für den Einsatz in Kraftfahrzeugen mit nicht elektrisch leitenden Karosserien, wie faserverstärkten Kunstoffkarosserien.

Um bei der Anordnung einer kombinierten Masserückführung die galvanische Kopplung zwischen den beiden Spannungsebenen zu minimieren wird vorgeschlagen, für die zwischen der ersten und der zweiten Flachleitung angeordnete, die Masse rückführende dritte Flachleitung einen größeren Leitungsquerschnitt anzusetzen als für zumindest zwei der weiteren Flachleitungen in dem Kabel. Alternativ zu einer kombinierten Masserückführung kann eine noch effizientere Reduktion der galvanischen Kopplung zwischen den beiden Spannungsebenen über eine separate Masserückführung der beiden Spannungsebenen erzielt werden. Hierbei können die beiden Masse rückführenden Flachleitungen entweder nebeneinander zwischen den beiden die verschiedenen Bordnetzspannungen des Kraftfahrzeugs führenden Flachleitungen, oder alternierend angeordnet sein.

Um die Energieeffizienz der 48V-Spannungsebene optimal auszunutzen, wird vorgeschlagen, einen Gleichspannungswandler in das Kraftfahrzeugbordnetz zu integrieren. Dieser kann die 48V-Gleichspannung auf 12-V Gleichspannung transformieren und die elektrische Leistung des 48 V-Netzes somit auch den Fahrzeugverbrauchern der 12 V-Spannungsebene zur Verfügung stellen.

Weiterhin wird vorgeschlagen, dass neben der ersten Flachleitung, der zweiten Flachleitung und der dritten Flachleitung zumindest eine weitere mit dem ersten Pol einer dritten Spannungsquelle elektrisch leitend verbundene Flachleitung und/oder eine weitere mit dem zweiten Pol der ersten und/oder zweiten und/oder dritten Spannungsquelle elektrisch leitend verbundene Flachleitung angeordnet ist. Im Falle einer Anordnung von drei Spannungsquellen wäre bevorzugt eine Anordnung von zumindest fünf Flachleitungen denkbar, so dass alle drei eine elektrische Spannung abgreifenden Flachleitungen durch Masse rückführende Flachleitungen voneinander getrennt und in einem Kabel geführt sind.

Bezüglich einer Anordnung mit drei Spannungsquellen wird vorgeschlagen, dass über die Pole der ersten Spannungsquelle eine andere Potentialdifferenz abgreifbar ist, als über die Pole der zweiten Spannungsquelle und/oder über die Pole der dritten Spannungsquelle, insbesondere dass über die Pole aller drei Spannungsquellen eine voneinander verschiedene Potentialdifferenz abgreifbar ist. Vorstellbar ist neben einer 48 V-Spannungsebene und einer 12 V-Spannungsebene noch eine Hochvoltebene, z. B. eine 100 V-Ebene. Ebenso wäre eine weitere Spannungsebene zwischen der 48 V - und der 12 V-Ebene, beispielsweise eine 24 V-Ebene denkbar. Auch möglich wäre ein Mehrspannungsbordnetz für Kraftfahrzeuge mit drei Spannungsquellen, bei dem über zwei der drei Spannungsquellen die gleiche elektrische Spannung abgreifbar ist.

Zum besseren Verständnis sei darauf hingewiesen, dass gegenständlich mit Hochvolt- bzw. Hochspannungsebene eine Spannungsebene bezeichnet wird, die eine Potentialdifferenz von > 48 V abgreift. Mit der Niederspannungsebene wird dagegen gegenständlich eine Spannungsebene bezeichnet, die eine Potentialdifferenz bis einschließlich 12 V abgreift. Die zwischen der Spannungsebene von >12 V und > 48 V liegende Spannungsebene wird vorliegend schließlich als Mittelspannungsebene bezeichnet. Demnach werden im Folgenden auch die Kraftfahrzeugverbraucher, die einen geringen Stromverbrauch aufweisen und vorzugsweise über die Niederspannungsebene mit elektrischer Spannung versorgt werden, als Niederspannungs - oder Niedervoltverbraucher (NV) bezeichnet, während alle Kraftfahrzeugverbraucher - außer einem Elektromotor eines Elektro - oder Hybridfahrzeugs - die kurzzeitig einen hohen Leistungsbedarf haben, vorzugsweise von der Mittelspannungsebene mit elektrischer Spannung versorgt werden und demnach als Mittelspannungsverbraucher (MV) bezeichnet werden. Über die Hochspanungsebene von >48 V wird wegen des großen Aufwands der Errichtung eines Berührschutzes bevorzugt ein Elektromotor (EM) eines Elektro - oder Hybridfahrzeugs mit elektrischer Spannung versorgt oder eine Bremsenergie-Rückgewinnung angeschlossen.

Ein weiterer Aspekt ist ein Spannungsebenen - übergreifendes Multilayerkabel für den Einsatz in Mehrspannungsbordnetzen von Kraftfahrzeugen, das zumindest drei in ihrer Längsrichtung im Wesentlichen parallel zueinander verlaufende Flachleitungen umfasst, wobei eine erste der Flachleitungen mit einem ersten Pol einer ersten Spannungsquelle elektrisch leitend verbindbar ist, eine zweite der Flachleitungen mit einem ersten Pol einer zweiten Spannungsquelle elektrisch leitend verbindbar ist und eine dritte der Flachleitungen mit einem zweiten Pol einer ersten und/oder zweiten Spannungsquelle elektrisch leitend verbindbar ist und das dadurch gekennzeichnet ist, dass die dritte Flachleitung zwischen zumindest der ersten und der zweiten Flachleitung angeordnet ist.

Um eine einfache Verlegung des Multilayerkabels im Kraftfahrzeug zu ermöglichen, kann das Multilayerkabel vorzugsweise biegesteif gebildet sein. Unter Biegesteifigkeit kann eine Steifigkeit verstanden werden, bei der eine größere Kraft als die Gewichtskraft notwendig ist, um eine plastische Verformung herbeizuführen.

Bezüglich des Materials der Flachleitungen wird vorgeschlagen, dass zumindest eine der Flachleitungen zumindest teilweise aus einem Aluminiumwerkstoff aus Aluminium oder einer Legierung davon gebildet ist und/oder dass zumindest eine der Flachleitungen zumindest teilweise aus einem Kupferwerkstoff aus Kupfer oder einer Legierung davon gebildet. Dabei kann eine Materialauswahl der Flachleitungen in Abhängigkeit des über die Flachleitungen zu führenden Stroms getroffen werden. Zum Beispiel kann eine Flachleitung, die für die Spannungsversorgung von Fahrzeugverbrauchern mit kurzzeitig hohem Leistungsbedarf vorgesehen ist, zumindest teilweise aus einem sehr guten elektrischen Leiter und Wärmeleiter, wie einem Kupferwerkstoff gebildet sein. Ist eine Flachleitung dagegen zur Spannungsversorgung elektrischer Verbraucher mit geringem Leistungsbedarf vorgesehen, so kann diese aufgrund der Gewichts - und Kosteneinsparung bevorzugt aus einem Aluminiumwerkstoff gebildet sein. Weiterhin kann eine Materialauswahl der Flachleitungen auch in Abhängigkeit der Verbindung der Flachleitungen mit den Spannungsquellen oder der Flachleitungen untereinander erfolgen. Aufgrund der guten Verformbarkeit bietet sich ein Kupferwerkstoff bei der Verwendung von lösbaren Verbindungen, wie Klemmen, Steckverbindern oder Kabelschuhen an. Ein Aluminiumwerkstoff weist hierbei den Nachteil auf, dass er sich bei höheren Temperaturen leicht verformt und somit Wackelkontakte an den Verbindungsstücken auftreten können. Um die Entstehung eines stabilen Lichtbogens zu vermeiden, wird daher vorgeschlagen, insbesondere bei der Flachleitung, an der eine höhere elektrische Spannung von 48 V oder Hochspannung anliegt einen Kupferwerkstoff zu verwenden.

Aufgrund der bekannten materialtechnischen Vorteile bezüglich der Form der Flachleitungen wird vorgeschlagen, dass zumindest eine der Flachleitungen einen im Wesentlichen rechteckigen Querschnitt aufweist, dessen Höhe geringer als dessen Breite ist. Es wird vorgeschlagen, dass die Höhe weniger als 3 mm, vorzugsweise weniger als 2,5 mm beträgt und dass das Verhältnis zwischen Höhe und Breite zumindest einer der Flachleitungen zwischen 1:2 und 1:15, insbesondere zwischen 1:5 und 1:10 liegt.

Aufgrund der Art der Ausbreitung des elektrischen Feldes über die Flachleitung treten besonders an den Ecken und Kanten der Flachleitungen hohe Feldstärken auf, die zu Überschlägen führen können. Deshalb wird zur Vorbeugung von elektrischen Überschlägen zwischen den spannungsführenden Flachleitungen vorgeschlagen, dass die Kanten und/oder Ecken der Flachleitungen abgerundet sein können. Hierbei wird ein Mindesteckradius von 1 mm vorgeschlagen, bevorzugt ein Mindesteckradius von 2,5 mm, insbesondere ein Mindesteckradius von über 2,5 mm.

Zur weiteren Vorbeugung von elektrischen Überschlägen zwischen den Flachleitungen ist ein Mindestabstand zwischen den Flachleitungen vorgesehen. Der Mindestabstand ist neben der über die Flachleitungen abgegriffenen elektrischen Spannung von der Art und Schichtdicke der Isolation zwischen den Flachleitungen abhängig. Es wird ein Mindestabstand von zumindest 0,2 mm vorzugsweise 1mm zwischen den Flachleitungen vorgeschlagen.

In Abhängigkeit der angeschlossenen Verbraucher kann es notwendig sein über die Flachleitungen des Kraftfahrzeugbordnetzes kurzzeitig hohe Ströme zu leiten. Besonders der Starter, oder Systeme wie die Bremsenergie-Rückgewinnung, Start-Stopp-Systeme, Wankstabilisatoren oder Hybrid-Systeme haben kurzzeitig einen hohen Leistungsbedarf. Zwar werden diese Systeme günstigerweise von der 48 V-Spannungsebene versorgt - was bedeutet, dass im Gegensatz zur 12 V-Spannungsebene bei gleichem Strom die vierfache Leistung erzielt wird und folglich die Anforderungen an die Stromtragfähigkeit der Flachleitung sinken - jedoch ist je nach Menge der gleichzeitig zu versorgenden Systeme trotzdem eine hohe Stromtragfähigkeit der Flachleitungen wünschenswert. Deshalb wird vorgeschlagen, dass die Stromtragfähigkeit zumindest einer der Flachleitungen zumindest 50 Ampere, bevorzugt 100 Ampere beträgt.

Um Gewicht einzusparen ist es vorteilhaft, nur bei denjenigen Leitungen einen großen Leitungsquerschnitt anzusetzen, die auch einen großen Strom führen müssen. Deshalb wird vorgeschlagen, dass zumindest eine der Flachleitungen einen größeren Leitungsquerschnitt als zumindest zwei der weiteren Flachleitungen aufweist.

Um Kurzschlüsse oder Lichtbögen zwischen einander unmittelbar angrenzenden Flachleitungen zu verhindern, ist vorgesehen, zumindest eine Isolation zwischen den Flachleitungen anzuordnen. Alternativ können auch zwei oder mehr Isolationen aus gleichen oder verschiedenen Isoliermaterialien zwischen zwei einander unmittelbar angrenzenden Flachleitungen angeordnet sein. Denkbar ist auch, dass zumindest eine der Flachleitungen zusätzlich zu der zwischen den Flachleitungen angeordneten Isolation mit einer weiteren Isolationsschicht überzogen ist. Bevorzugt können alle Flachleitungen zusätzlich mit einer weiteren Isolationsschicht überzogen sein.

Ein geeignetes Isoliermaterial kann dabei aus einem Kunststoff gebildet sein. Der Kunststoff kann bevorzugt ein Elastomer, besonders bevorzugt ein thermoplastischer Kunststoff sein. Der thermoplastische Kunststoff kann ein thermoplastischer Standardkunststoff, bevorzugt ein thermoplastischer Konstruktionskunststoff, insbesondere ein thermoplastischer Hochleistungskunststoff sein.

Für eine einfache Verlegbarkeit des Multilayer-Kabels im Kraftfahrzeug ist es vorteilhaft, wenn dieses möglichst biegsam und flexibel gebildet ist. Gegenständlich wird deshalb vorgeschlagen, dass die die Flachleitungen umgebende Isolation aus einem flexiblen, biegefesten Isoliermaterial gebildet ist, wobei dessen Biegefestigkeit nach DIN EN ISO 178 mindestens 20 MPa, bevorzugt mehr als 40 MPa, besonders bevorzugt mehr als 60 MPa beträgt.

Da besonders bei den Flachleitungen, die einen hohen Strom übertragen schnell hohe Temperaturen entstehen, ist es notwendig, die verwendeten Isoliermaterialien zumindest dort für entsprechend hohe Temperaturen auszulegen. Es wird deshalb vorgeschlagen, dass eine zumindest eine der Flachleitungen umgebende Isolation aus einem temperaturstabilen Isoliermaterial gebildet ist, wobei sich dessen zulässiger Temperaturbereich von - 10°C bis + 80°C, bevorzugt von -20°C bis + 120°C, besonders bevorzugt von unter - 20°C bis über 120 °C erstreckt. Insbesondere kann sich ein zulässiger Temperaturbereich von - 40°C bis + 120°C erstrecken. Vorzugsweise ist mehr als eine, besonders bevorzugt sind alle Isolationen aus einem entsprechend temperaturstabilen Isoliermaterial gebildet.

Eine grundsätzlich notwendige Voraussetzung für ein geeignetes Isoliermaterial ist dessen je nach Anforderungsbereich geringe spezifische elektrische Leitfähigkeit. Hierzu wird vorgeschlagen, dass eine zumindest eine der Flachleitungen umgebende Isolation aus einem nichtleitenden Isoliermaterial gebildet ist, wobei dessen spezifische elektrische Leitfähigkeit zumindest weniger als 10⁻⁵ S·cm⁻¹, bevorzugt weniger als 10⁻¹⁰ S·cm⁻¹, besonders bevorzugt weniger als 10⁻¹⁵ S·cm⁻¹ beträgt. Vorzugsweise ist mehr als eine, besonders bevorzugt sind alle Isolationen aus einem entsprechend nichtleitenden Isoliermaterial gebildet.

Neben einer geringen spezifischen elektrischen Leitfähigkeit weist ein geeignetes Isoliermaterial zur Verhinderung der Entstehung stabiler Lichtbögen vorteilhafterweise eine hohe Durchschlagsfestigkeit auf. Besonders die Flachleitung, welche elektrisch leitend mit der 48 V-Spannungsquelle oder gar einer Hochspannungsquelle verbunden ist, erfordert eine entsprechende Isolation aus durchschlagsfestem Isoliermaterial, weil sich stabil brennende Lichtbögen erst ab einer Spannung von ca. 18 V bilden. Deshalb wird vorgeschlagen, dass eine zumindest eine der Flachleitungen umgebende Isolation aus einem durchschlagsfesten Isoliermaterial gebildet ist, wobei dessen Durchschlagsfestigkeit zumindest mehr als 5 kV/mm, bevorzugt mehr als 20 kV/mm, besonders bevorzugt mehr als 50 kV/mm beträgt. Vorzugsweise ist mehr als eine, besonders bevorzugt sind alle Isolationen aus einem entsprechend durchschlagsfesten Isoliermaterial gebildet. Denkbar ist zudem, dass nicht nur das Isoliermaterial, sondern auch die Schichtdicke des Isoliermaterials abhängig von der zu isolierenden Flachleitung ausgewählt wird. Vorzugsweise kann die Flachleitung, welche elektrisch leitend mit der 48 V-Spannungsquelle oder gar einer Hochspannungsquelle verbunden ist mit einer größeren Schichtdicke des Isoliermaterials isoliert werden als zumindest zwei der anderen Flachleitungen.

Besondere Beachtung hinsichtlich der Gefahr von Kurzschlüssen in Mehrspannungsbordnetzen für Kraftfahrzeuge gilt der Vermeidung von Feuchtigkeitseinflüssen. Um einen negativen Einfluss von Feuchtigkeit auf das Kraftfahrzeugbordnetz möglichst effektiv zu vermeiden, wird vorzugsweise ein Isoliermaterial verwendet, das hydrolysebeständig ist und/oder nur geringe Mengen Wasser aufnimmt. Daher wird vorgeschlagen, dass eine zumindest eine der Flachleitungen umgebende Isolation aus einem Isoliermaterial mit einem Wasseraufnahmevermögen innerhalb von 24 h bei 23 °C nach DIN EN ISO 62 von weniger als 0,07 %, bevorzugt von weniger als 0,03 %, besonders bevorzugt von weniger als 0,01 % gebildet ist. Vorzugsweise ist mehr als eine, besonders bevorzugt sind alle Isolationen aus einem Isoliermaterial mit einem entsprechend geringen Wasseraufnahmevermögen gebildet.

Ebenfalls relevant für ein geeignetes Isoliermaterial ist dessen Kriechstromfestigkeit, die eng mit dem Wasseraufnahmevermögen des Isoliermaterials verbunden ist. Auch bei nach innen intakten Isolationen kommt es unter anderem durch Wasseraufnahme des Isoliermaterials zu Kriechströmen über die Außenfläche des Leiters. Es wird deshalb vorgeschlagen, dass eine zumindest eine der Flachleitungen umgebende Isolation aus einem Isoliermaterial mit einer Kriechstromfestigkeit entsprechend einem CTI-Wert von größer als 50 V, bevorzugt größer als 200 V, besonders bevorzugt größer als 400 V gebildet ist. Vorzugsweise ist mehr als eine, besonders bevorzugt sind alle Isolationen aus einem Isoliermaterial mit einer entsprechend hohen Kriechstromfestigkeit gebildet.

Um eine einfache Verkabelung der Multilayerkabel mit den Verbrauchern des Kraftfahrzeugbordnetzes zu gewährleisten, kann zumindest ein Abgriff einer der Flachleitungen, vorzugsweise mehrere Abgriffe einer oder mehrerer Flachleitungen aus dem Isoliermaterial herausgeführt sein.

Vorteilhafterweise kann in dem Multilayerkabel neben den Flachleitungen zumindest ein Datenübertragungskabel angeordnet sein. Dieses kann als verdrillte Doppelleitung, als Koaxialkabel oder als Glasfaserkabel gebildet sein und zur Verbesserung der elektromagnetischen Verträglichkeit des Kraftfahrzeugbordnetzes zusätzlich eine Schirmung aus einer Metallfolie, einem Metallband, einem Metallgeflecht oder einer Metallbeschichtung aufweisen.

Zur weiteren Verbesserung der elektromagnetischen Verträglichkeit des Kraftfahrzeugbordnetzes wird vorgeschlagen, dass zusätzlich zumindest eine der Flachleitungen mit einer als Metallfolie, als Metallband, als Metallgeflecht oder als Metallbeschichtung gebildeten Schirmung ummantelt ist. Vorzugsweise ist mehr als eine, besonders bevorzugt sind alle Flachleitungen zusätzlich mit einer als Metallfolie, als Metallband, als Metallgeflecht oder als Metallbeschichtung ausgebildeten Schirmung ummantelt.

Nachfolgend wird der Gegenstand anhand von einer Ausführungsbeispiele zeigenden Zeichnungen näher erläutert. In der Zeichnung zeigen:
- Fig. 1: einen Querschnitt eines Multilayerkabels mit drei Flachleitungen gemäß einem ersten Ausführungsbeispiel
- Fig. 2: einen Querschnitt eines Multilayerkabels mit drei Flachleitungen gemäß einem zweiten Ausführungsbeispiel
- Fig. 3: einen Querschnitt eines Multilayerkabels mit drei Flachleitungen gemäß einem dritten Ausführungsbeispiel
- Fig. 4: einen Querschnitt eines Multilayerkabels mit drei Flachleitungen gemäß einem vierten Ausführungsbeispiel
- Fig. 5: einen Querschnitt eines Multilayerkabels mit vier Flachleitungen gemäß einem ersten Ausführungsbeispiel
- Fig. 6: einen Querschnitt eines Multilayerkabels mit vier Flachleitungen gemäß einem zweiten Ausführungsbeispiel
- Fig. 7: einen Querschnitt eines Multilayerkabels mit vier Flachleitungen gemäß einem dritten Ausführungsbeispiel
- Fig. 8: einen Querschnitt eines Multilayerkabels mit vier Flachleitungen gemäß einem vierten Ausführungsbeispiel
- Fig. 9: einen Querschnitt eines Multilayerkabels mit vier Flachleitungen gemäß einem fünften Ausführungsbeispiel
- Fig. 10: einen Querschnitt eines Multilayerkabels mit vier Flachleitungen gemäß einem sechsten Ausführungsbeispiel
- Fig. 11: einen Querschnitt eines Multilayerkabels mit fünf Flachleitungen gemäß einem ersten Ausführungsbeispiel
- Fig. 12: einen Querschnitt eines Multilayerkabels mit fünf Flachleitungen gemäß einem zweiten Ausführungsbeispiel
- Fig. 13: einen Querschnitt eines Multilayerkabels mit fünf Flachleitungen gemäß einem dritten Ausführungsbeispiel
- Fig. 14: einen Querschnitt eines Multilayerkabels mit fünf Flachleitungen gemäß einem vierten Ausführungsbeispiel
- Fig. 15: ein Mehrspannungsbordnetzsystem für Kraftfahrzeuge mit zwei Spannungsquellen
- Fig. 16: ein Mehrspannungsbordnetzsystem für Kraftfahrzeuge mit drei Spannungsquellen

Die Figuren zeigen verschiedene Ausführungsbeispiele des gegenständlichen Multilayerkabels und Mehrspannungsbordnetzsystems für Kraftfahrzeuge.

Nach Möglichkeit wurden in den Zeichnungen für gleiche Elemente die gleichen Bezugszeichen verwendet.

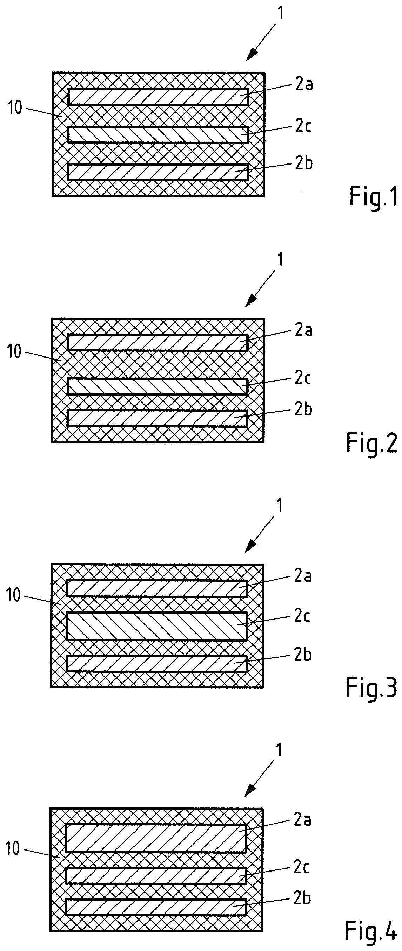

Figur 1 zeigt den Querschnitt eines Multilayerkabels 1 mit drei Flachleitungen 2a, 2b, 2c. Die Flachleitungen 2 sind weitgehend parallel übereinander angeordnet und durch eine die Flachleitungen 2 umgebende Isolation 10 voneinander getrennt. Es versteht sich, dass gemäß einer anderen nicht beanspruchten Variante anstatt Flachleitungen ebenso Rundleitungen eingesetzt werden können. Gleichwohl kann auch eine Kombination von Rund - und Flachleitungen vorgesehen sein. Alle im Zusammenhang mit der Flachleitung zuvor und nachfolgend beschriebenen Ausgestaltungen und Anwendungen gelten natürlich soweit anwendbar auch für Rundleitungen.

Figur 1 zeigt eine Ausführungsform eines Multilayerkabels 1, bei der über die erste Flachleitung 2a eine höhere Potentialdifferenz beziehungsweise elektrische Spannung abgegriffen wird, als über die zweite Flachleitung 2b. Bevorzugt wird über die erste Flachleitung 2a eine elektrische Spannung von 48 V abgegriffen, während über die zweite Flachleitung 2b vorzugsweise eine elektrische Spannung von 12 V abgegriffen wird. Die zwischen der ersten und der zweiten Flachleitung angeordnete dritte Flachleitung 2c dient dabei als kombinierte Masserückführung. Es ist erkannt worden, dass die elektromagnetische Verträglichkeit innerhalb des Kraftfahrzeugbordnetzes dank der speziellen Anordnung der Masserückleitung 2c zwischen den jeweils eine elektrische Spannung führenden Flachleitungen 2a, 2b erheblich verbessert werden kann. Die Verbesserung der elektromagnetischen Verträglichkeit basiert dabei auf dem gegenläufigen Stromfluss der angrenzenden Flachleitungen 2, wodurch sich die abgestrahlten Magnetfelder der einzelnen Flachleitungen 2a, 2b, 2c teilweise aufheben und die magnetische Kopplung zwischen diesen deutlich reduziert wird.

Die Flachleitungen 2 sind aus einem elektrisch leitfähigen Material, wie einem Kupferwerkstoff oder einem Aluminiumwerkstoff gebildet.

Vorteilhafterweise ist das Material der Flachleitungen 2 an deren Anforderung angepasst. Ein Kupferwerkstoff wird im Bereich der Stromübertragung vorzugsweise dort verwendet, wo nur ein begrenzter Bauraum zur Verfügung steht und gleichzeitig hohe Einsatztemperaturen vorliegen sowie hohe mechanische Anforderungen an das Material gestellt werden. Ein Aluminiumwerkstoff wird im Bereich der Stromübertragung überall dort eingesetzt, wo Gewicht oder Kosten eingespart werden sollen und gleichzeitig ausreichend Platz vorhanden ist. In einer besonders vorteilhaften Ausführungsform des Multilayerkabels 1 ist die erste der Flachleitungen 2a - die einen hohen Strom führen soll - vorzugsweise aus einem Kupferwerkstoff gebildet, während eine zweite und dritte der Flachleitungen 2b, 2c aus einem Aluminiumwerkstoff gebildet sind. Ebenso können auch beide - eine elektrische Spannung abgreifende - Flachleitungen 2a, 2b aus einem Kupferwerkstoff gebildet sein und nur die Masse rückführende Flachleitung 2c aus einem Aluminiumwerkstoff.

Für eine gute elektromagnetische Kopplung der Leitungselemente und eine entsprechend optimierte elektromagnetische Verträglichkeit wird eine dichte Anordnung der Flachleitungen 2 a - c übereinander vorausgesetzt. Um allerdings auch bei einer großen mechanischen Beanspruchung und hohen Potentialdifferenzen eine ausreichende Isolation 10 zwischen den Flachleitungen 2 a - c zu gewährleisten, hat die Schichtdicke des Isoliermaterials zumindest eine Dicke von 0,2 mm, bevorzugt von mehr als 1mm. Insbesondere wird die Schichtdicke des zwischen zwei Flachleitungen 2 a - c angeordneten Isoliermaterials variabel an die Potentialdifferenz zwischen diesen Flachleitungen 2 angepasst.

Figur 2 zeigt den Querschnitt eines Multilayerkabels 1 mit drei Flachleitungen 2a, 2b, 2c, bei dem die Schichtdicke des zwischen zwei Flachleitungen 2 a - c angeordneten Isoliermaterials an die elektrische Spannung zwischen den Flachleitungen 2 a - c angepasst ist. Dieser unterscheidet sich von der in Figur 1 dargestellten Ausführungsform dadurch, dass die Schichtdicke des Isoliermaterials zwischen der ersten Flachleitung 2a und der dritten Flachleitung 2c entsprechend der größeren elektrischen Spannung zwischen diesen Flachleitungen 2 a, c größer ist, als die Schichtdicke des Isoliermaterials zwischen der zweiten Flachleitung 2b und der dritten Flachleitung 2c.

Figur 3 zeigt alternativ zu der Vergrößerung der Schichtdicke des Isoliermaterials zwischen den Flachleitungen 2 a - c eine Vergrößerung der Querschnittsfläche der Masse rückführenden Flachleitung 2c. Durch den vergrößerten Querschnitt der Masserückführung kann die galvanische Kopplung zwischen den über die Masserückführung verbundenen Spannungsebenen reduziert werden, wodurch die elektromagnetische Verträglichkeit des Kraftfahrzeugbordnetzes trotz einer kombinierten Masserückführung gewahrt wird.

Figur 4 zeigt eine Ausführungsform des Multilayerkabels 1 mit drei Flachleitungen 2 a - c bei dem anstatt eines vergrößerten Querschnitts der Masse rückführenden Flachleitung 2c der Querschnitt der ersten Flachleitung 2a vergrößert ist. Dies hat den Vorteil einer größeren Stromtragfähigkeit, was besonders bei einer Flachleitung - die Kraftfahrzeugverbraucher mit kurzzeitig hohem Leistungsbedarf versorgt - eine sinnvolle Ausgestaltung ist.

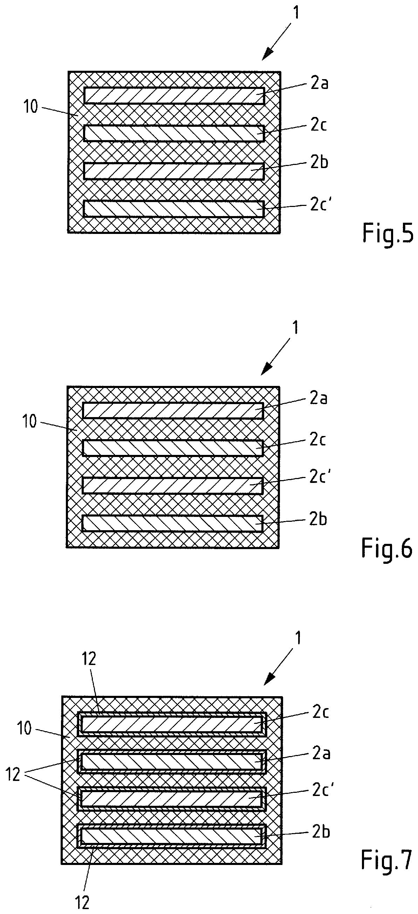

In Figuren 5 - 9 sind Ausführungsformen eines Multilayerkabels 1 mit vier Flachleitungen 2 a - c' dargestellt.

Figur 5 zeigt ein Multilayerkabel 1, mit vier Flachleitungen 2a, 2b, 2c, 2c'. Über einer ersten der Masserückführung dienenden Flachleitung 2c' ist eine zweite Flachleitung 2b angeordnet, die vorzugsweise eine elektrische Spannung von 12 V führt. Darüber ist eine weitere der Masserückführung dienende Flachleitung 2c angeordnet, über der schließlich eine erste Flachleitung 2a angeordnet ist, die vorzugsweise eine Potentialdifferenz von 48 V abgreift. Durch die Ausführung mit zwei Flachleitungen zur Masserückführung 2c, 2c' ist eine separate Masserückführung der ersten und zweiten Flachleitung 2 a, b und damit eine deutliche Reduktion der galvanischen Kopplung zwischen den beiden Spannungsebenen 2a, 2b möglich.

Figur 6 zeigt eine weitere Ausführungsform zur separaten Masserückführung. Anstatt dem alternierenden Flachleitungsaufbau sind hier zwischen den beiden eine elektrische Spannung führenden Flachleitungen 2a, 2b nicht nur eine, sondern zwei Masse rückführende Flachleitungen 2c, 2c' angeordnet. Diese Anordnung bietet den Vorteil, dass die eine elektrische Spannung führenden Flachleitungen 2a, 2b noch weiter voneinander entfernt sind, was die Wahrscheinlichkeit eines Kurzschlusses zwischen diesen Flachleitungen 2a, 2b weiter reduziert. Ein Kurzschluss zwischen diesen beiden Flachleitungen 2a, 2b kann im Falle von unterschiedlichen Spannungsniveaus zur Zerstörung der für das niedrigere Spannungsniveau ausgelegten elektrischen Kraftfahrzeugverbraucher führen.

Figur 7 zeigt eine Ausführungsform eines Multilayerkabels 1 mit vier Flachleitungen 2a, 2b, 2c, 2c', bei der über die unterste Flachleitung 2b vorzugsweise eine Potentialdifferenz von 12 V geführt wird. Über der Flachleitung 2b ist eine der Masserückführung dienende Flachleitung 2c' angeordnet. Darüber wiederum ist die Flachleitung 2a angeordnet, die vorzugsweise eine elektrische Spannung von 48 V führt, gefolgt von einer weiteren der Masserückführung dienenden Flachleitung 2c. Zusätzlich ist jede Flachleitung 2 a - c' noch mit einer elektromagnetischen Schirmung 12 ummantelt, die als Metallfolie, als Metallband, als Metallgeflecht oder als Metallbeschichtung ausgebildet sein kann. Die elektromagnetische Schirmung 12 schirmt die einzelnen Flachleitungen 2 a - c' voneinander und vom übrigen Kraftfahrzeugbordnetz ab, was zu einer verbesserten elektromagnetischen Verträglichkeit führt.

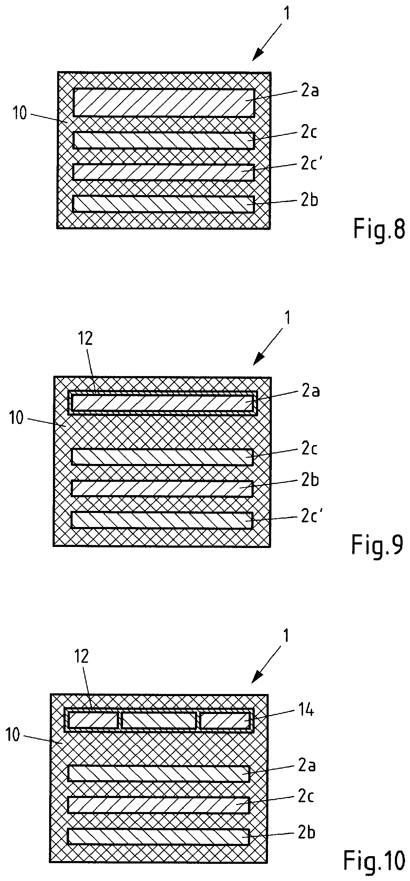

Figur 8 zeigt die Anordnung eines Multilayerkabels 1 wie in Figur 6, mit dem einzigen Unterschied eines vergrößerten Leitungsquerschnitts der ersten Flachleitung 2a, welche bevorzugt eine elektrische Spannung von 48 V führt. Dies hat den Vorteil einer größeren Stromtragfähigkeit, was besonders bei einer Flachleitung - die Kraftfahrzeugverbraucher mit kurzzeitig hohem Leistungsbedarf versorgt - eine sinnvolle Ausgestaltung ist.

Figur 9 zeigt den Querschnitt eines Multilayerkabels 1 mit vier Flachleitungen 2a, 2b, 2c, 2c' entsprechend Figur 5 mit dem einzigen Unterschied, dass die Schichtdicke des Isoliermaterials zwischen den Flachleitungen 2a und 2c entsprechend der größeren elektrischen Potentialdifferenz größer ausgelegt ist als zwischen den übrigen, was einem besonderen Schutz vor Überschlägen und Lichtbögen dient, die erst bei höheren Potentialdifferenzen ab 18 V stabil brennen. Zusätzlich zu dem größeren Abstand zwischen den Flachleitungen 2a und 2c und der dickeren Isolation ist die Flachleitung 2a noch von einer Schirmung 12 umhüllt, die besonders die elektromagnetische Verträglichkeit des Kraftfahrzeugbordnetzes verbessern soll. Alternativ können auch eine andere oder alle Flachleitungen 2 a - c' geschirmt ausgeführt sein.

Figur 10 zeigt den Querschnitt eines Multilayerkabels 1, bei dem neben den Flachleitungen 2a, 2c und 2b noch drei geschirmte Datenkabel 14 vorhanden sind. Die Mitführung der Datenkabel 14 erleichtert den Verkabelungsaufwand erheblich. Die Datenkabel 14 können als verdrillte Doppelleitung, als Koaxialkabel oder als Glasfaserkabel gebildet sein. Ebenso ist eine Kombination denkbar. Je nach Art der verwendeten Datenkabel 14 kann auch auf eine zusätzliche elektromagnetische Schirmung 12 verzichtet werden.

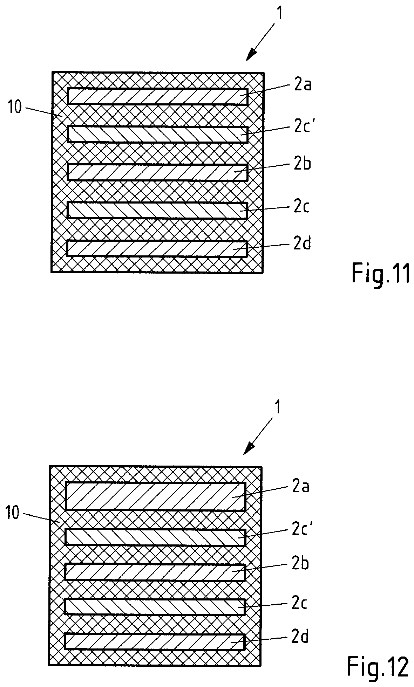

In Figuren 11- 14 sind Ausführungsformen eines Multilayerkabels 1 mit fünf Flachleitungen 2a, 2b, 2c, 2c', 2d dargestellt.

Figur 11 zeigt eine Ausführungsform eines Multilayerkabels 1 mit fünf Flachleitungen 2a, 2b, 2c, 2c', 2d, bei dem neben einer vorzugsweise eine elektrische Spannung von 12 V führenden Flachleitung 2b und einer vorzugsweise eine elektrische Spannung von 48 V abgreifenden Flachleitung 2a eine vorzugsweise eine elektrische Hochspannung führende Flachleitung 2d angeordnet ist. Hierbei ist die unten angeordnete Flachleitung 2d von der mittig angeordneten Flachleitung 2b durch eine Masse rückführende Flachleitung 2c getrennt. Ebenso ist die Flachleitung 2b durch eine Masse rückführende Flachleitung 2c' von der oben angeordneten Flachleitung 2a getrennt. Die zusätzliche Implementierung einer Hochspannungsebene neben einer 12V- sowie einer 48V-Spannungsebene kann vorzugsweise im Bereich von Kraftfahrzeugbordnetzen von Elektro - oder Hybridfahrzeugen sinnvoll sein. Hier kann die Hochspannungsebene vorzugsweise für die Versorgung des Elektromotors verwendet werden, während die Spannungsebene von 12 V idealerweise zur Spannungsversorgung von Fahrzeugverbrauchern genutzt werden kann, die einen geringen Stromverbrauch aufweisen. Die Spannungsebene von 48 V kann dann vorzugsweise weiterhin für die Versorgung von Fahrzeugverbrauchern außer dem Elektromotor genutzt werden, die kurzzeitig einen hohen Leistungsbedarf haben.

Figur 12 zeigt die gleiche Anordnung eines Multilayerkabels 1 mit fünf Flachleitungen 2a, 2b, 2c, 2c', 2d wie Figur 11, mit der Ausnahme, dass der Querschnitt der vorzugsweise eine elektrische Spannung von 48 V führenden Flachleitung 2a vergrößert ist. Dies hat den Vorteil einer größeren Stromtragfähigkeit, was besonders bei einer Flachleitung - die Kraftfahrzeugverbraucher mit kurzzeitig hohem Leistungsbedarf versorgt - eine sinnvolle Ausgestaltung ist.

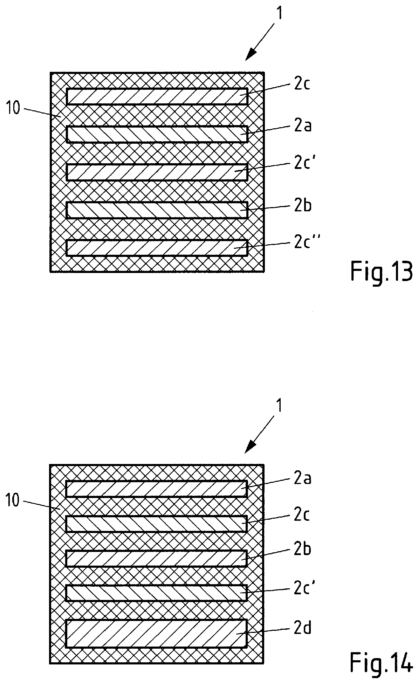

Figur 13 zeigt eine Anordnung eines Multilayerkabels 1 mit fünf Flachleitungen 2a, 2b, 2c, 2c', 2c". Diese ist aus drei Masse rückführenden Flachleitungen 2c, 2c', 2c" und nur zwei eine elektrische Spannung führenden Flachleitungen 2a, 2b gebildet. Dabei ist sowohl die vorzugsweise eine elektrische Spannung von 12 V führende Flachleitung 2b, als auch die vorzugsweise eine elektrische Spannung von 48 V führende Flachleitung 2a zwischen zwei der Masse rückführenden Flachleitungen 2c, 2c', 2 c" angeordnet. In dieser Anordnung wird die Masse vorzugsweise separat zurückgeführt. Dabei kann eine der Flachleitungen 2a oder 2b wahlweise mit einer oder beiden benachbarten die Masse rückführenden Flachleitungen 2c, 2c', 2 c" elektrisch leitend verbunden sein.

Figur 14 zeigt die gleiche Anordnung eines Multilayerkabels 1 mit fünf Flachleitungen 2a, 2b, 2c, 2c', 2d wie Figur 11, mit der Ausnahme, dass der Querschnitt der vorzugsweise eine elektrische Hochspannung abgreifenden Flachleitung 2d vergrößert ist. Dies hat den Vorteil einer größeren Stromtragfähigkeit, was besonders bei einer Flachleitung - die einen Elektromotor eines Elektro - oder Hybridfahrzeugs versorgt - eine sinnvolle Ausgestaltung ist.

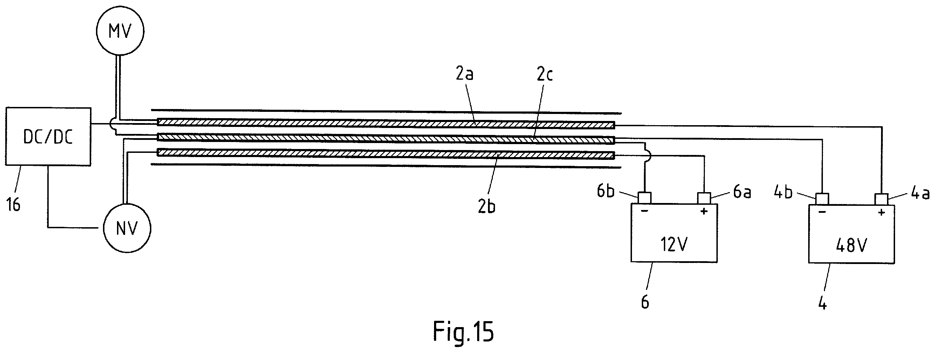

In Figur 15 ist ein Mehrspannungsbordnetzsystem für Kraftfahrzeuge mit zwei Spannungsquellen 4, 6 dargestellt. Die beiden Spannungsquellen 4, 6 sind mit drei in einem Multilayerkabel 1 geführten Flachleitungen 2a, 2b, 2c elektrisch leitend verbunden. Die erste Flachleitung 2a ist mit dem Plus-Pol 4a der ersten Spannungsquelle 4 elektrisch leitend verbunden, die zweite Flachleitung 2b ist mit dem Plus-Pol 6a der zweiten Spannungsquelle 6 elektrisch leitend verbunden und die zwischen der ersten 2a und der zweiten Flachleitung 2b angeordnete dritte Flachleitung 2c ist mit dem Minus-Pol der ersten 4b und zweiten Spannungsquelle 6b elektrisch leitend verbunden.

Wie in Figur 15 dargestellt, ist über die erste Spannungsquelle 4 vorzugsweise eine elektrische Spannung von 48 V abgreifbar, während über die zweite Spannungsquelle 6 vorzugsweise eine elektrische Spannung von 12 V abgreifbar ist. Die erste Spannungsquelle 4 ist für die Spannungsversorgung von Fahrzeugverbrauchern vorgesehen, die kurzzeitig einen hohen Leistungsbedarf haben (MittelspannungsVerbraucher (MV)), während die zweite Spannungsquelle 6 vorzugsweise für die Spannungsversorgung von Fahrzeugverbrauchern vorgesehen ist, die einen geringen Leistungsverbrauch aufweisen (Niedervolt-Verbraucher (NV)). Hierbei sei darauf hingewiesen, dass mit Mittelspannungs-Verbrauchern (MV) gegenständlich elektrische Verbraucher bezeichnet werden, die mit einer Gleichspannung von mehr als 12 V bis einschließlich 48 V versorgt werden. Mit Niederspannungsverbrauchern werden dagegen gegenständlich elektrische Verbraucher bezeichnet, die über eine Spannung von bis zu 12 V versorgt werden.

Eine Ausnahme der separierten Spannungsversorgung bildet der Gleichspannungswandler 16, der elektrisch leitend mit der ersten Spannungsquelle verbunden ist. Über den Gleichspannungswandler 16 kann die 48 V-Gleichspannung auf 12 V-Gleichspannung transformiert werden und die elektrische Ladung anschließend somit auch den Fahrzeugverbrauchern der 12 V-Spannungsebene zur Verfügung gestellt werden.

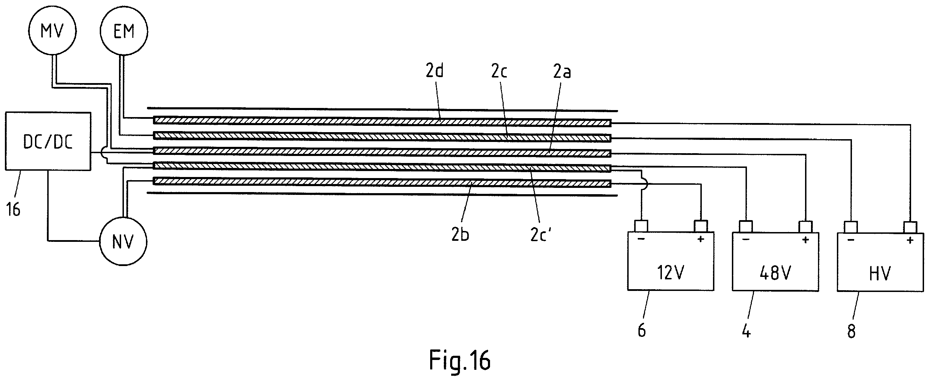

In Figur 16 ist ein Mehrspannungsbordnetzsystem für Kraftfahrzeuge, insbesondere für Elektro - oder Hybridfahrzeuge mit drei Spannungsquellen 4, 6, 8 dargestellt. Die drei Spannungsquellen 4, 6, 8 sind mit insgesamt fünf in einem Multilayerkabel 1 geführten Flachleitungen 2a, 2b, 2c, 2c' und 2d elektrisch leitend verbunden. Hierbei ist die Flachleitung 2d mit dem Plus-Pol 8a der Spannungsquelle 8 elektrisch leitend verbunden, die Flachleitung 2a mit dem Plus-Pol 4a der Spannungsquelle 4 elektrisch leitend verbunden und die Flachleitung 2b mit dem Plus-Pol 6b der Spannungsquelle 6 elektrisch leitend verbunden. Darüber hinaus ist die obere der beiden Masse rückführenden Flachleitungen 2c elektrisch leitend mit dem Minus-Pol 8b der Spannungsquelle 8 verbunden, während die andere mit 2c' bezeichnete Flachleitung sowohl mit dem Minus-Pol 4b der Spannungsquelle 4, als auch mit dem Minus-Pol 6b der Spannungsquelle 6 elektrisch leitend verbunden ist.

Wie in Figur 16 dargestellt, ist über die Spannungsquelle 8 vorzugsweise elektrische Hochspannung abgreifbar, während über die Spannungsquelle 4 vorzugsweise eine elektrische Spannung von 48 V und über die Spannungsquelle 6 vorzugsweise eine elektrische Spannung von 12 V abgreifbar ist. Die Spannungsquelle 8 ist dabei vorzugsweise für die Spannungsversorgung eines Elektromotors (EM) vorgesehen und mit einer separaten Masserückführung versehen. Die Spannungsquelle 4 dient dagegen vorzugsweise der Spannungsversorgung weiterer Verbraucher, die kurzzeitig einen hohen Leistungsbedarf haben (MV), während die Spannungsquelle 6 vorzugsweise für die Spannungsversorgung von Fahrzeugverbrauchern vorgesehen ist, die einen geringen Leistungsverbrauch aufweisen (NV). Auch in dem Mehrspannungsbordnetzsystem mit drei Spannungsquellen 4, 6, 8 ist ein Gleichspannungswandler 16 vorgesehen. Dieser ist auch hier elektrisch leitend mit der Spannungsquelle 4 verbunden und kann die 48 V-Gleichspannung auf 12 V-Gleichspannung transformieren, wodurch die elektrische Ladung auch den Fahrzeugverbrauchern der 12 V-Spannungsebene zur Verfügung gestellt werden kann.

## Patentansprüche

1. Mehrspannungsbordnetzsystem eines Kraftfahrzeugs umfassend
- zumindest drei in ihrer Längsrichtung im Wesentlichen parallel zueinander verlaufende Flachleitungen (2 a, b, c) sowie
- zumindest zwei Spannungsquellen (4, 6),
- wobei eine erste der Flachleitungen (2a) mit einem ersten Pol (4a) einer ersten der Spannungsquellen (4) elektrisch leitend verbunden ist, eine zweite der Flachleitungen (2b) mit einem ersten Pol (6a) einer zweiten der Spannungsquellen (6) elektrisch leitend verbunden ist und eine dritte der Flachleitungen (2c) mit einem zweiten Pol (4b, 6b) der ersten (4) und der zweiten Spannungsquelle (6) elektrisch leitend verbunden ist,
- **dadurch gekennzeichnet,**
**dass** die dritte Flachleitung (2c) zwischen zumindest der ersten (2a) und der zweiten Flachleitung (2c) angeordnet ist.

2. System nach Anspruch 1,
**dadurch gekennzeichnet,**
**dass** die erste Flachleitung (2a) über die Pole (4a,b) der ersten Spannungsquelle (4) eine höhere elektrische Potentialdifferenz abgreift, als die zweite Flachleitung (2b) über die Pole (6a,b) der zweiten Spannungsquelle (6), wobei die erste Flachleitung (2a) bevorzugt eine elektrische Potentialdifferenz von 24 V, besonders bevorzugt eine elektrische Potentialdifferenz von 48 V abgreift, während die zweite Flachleitung (2b) bevorzugt eine elektrische Potentialdifferenz von 12 V abgreift.

3. System nach einem der vorangehenden Ansprüche,
**dadurch gekennzeichnet,**
**dass** neben der ersten Flachleitung (2a), der zweiten Flachleitung (2b) und der dritten Flachleitung (2c) zumindest eine weitere mit dem ersten Pol (8a) einer dritten Spannungsquelle (8) elektrisch leitend verbundene Flachleitung (2d) und/oder eine weitere mit dem zweiten Pol (4b, 6b, 8b) der ersten (4) und/oder zweiten (6) und/oder dritten Spannungsquelle (8) elektrisch leitend verbundene Flachleitung (2c') angeordnet ist.

4. System nach einem der vorangehenden Ansprüche,
**dadurch gekennzeichnet,**
**dass** über die Pole (4a,b) der ersten Spannungsquelle (4) eine andere Potentialdifferenz abgreifbar ist, als über die Pole (6a,b) der zweiten Spannungsquelle (6) und/oder über die Pole (8a,b) der dritten Spannungsquelle (8), insbesondere dass über die Pole aller drei Spannungsquellen (4, 6, 8) eine voneinander verschiedene Potentialdifferenz abgreifbar ist.

5. System nach Anspruch 1 mit einem Multilayerkabel (1)
**dadurch gekennzeichnet,**
**dass** zumindest eine der Flachleitungen (2) zumindest teilweise aus Aluminium oder einer Legierung davon gebildet ist und/oder dass zumindest eine der Flachleitungen (2) zumindest teilweise aus Kupfer oder einer Legierung davon gebildet ist.

6. System nach Anspruch 5,
**dadurch gekennzeichnet,**
**dass** zumindest eine der Flachleitungen (2) einen im Wesentlichen rechteckigen Querschnitt aufweist, wobei insbesondere Kanten und/oder Ecken der Flachleitungen (2) abgerundet sind.

7. System nach einem der vorangehenden Ansprüche 5 oder 6,
**dadurch gekennzeichnet,**
**dass** der Abstand zwischen zumindest zwei der Flachleitungen (2) zumindest 0,2 mm, vorzugsweise mehr als 1 mm beträgt.

8. System nach einem der vorangehenden Ansprüche 5 bis 7,
**dadurch gekennzeichnet,**
**dass** die Stromtragfähigkeit zumindest einer der Flachleitungen (2) zumindest 50 A, bevorzugt zumindest 100 A beträgt.

9. System nach einem der vorangehenden Ansprüche 5 bis 8,
**dadurch gekennzeichnet,**
**dass** zumindest eine der Flachleitungen (2) einen größeren Leitungsquerschnitt als zumindest zwei der weiteren Flachleitungen (2) aufweist.

10. System nach einem der vorangehenden Ansprüche 5 bis 9,
**dadurch gekennzeichnet,**
**dass** eine die Flachleitungen (2) umgebende Isolation (10) aus einem flexiblen, biegefesten Isoliermaterial gebildet ist, wobei dessen Biegefestigkeit nach DIN EN ISO 178 mindestens 20 MPa, bevorzugt mehr als 40 MPa, besonders bevorzugt mehr als 60 MPa beträgt.

11. System nach einem der vorangehenden Ansprüche 5 bis 10,
**dadurch gekennzeichnet,**
**dass** eine zumindest eine der Flachleitungen (2) umgebende Isolation (10) aus einem temperaturstabilen Isoliermaterial gebildet ist, wobei sich dessen zulässiger Temperaturbereich von - 10°C bis + 80°C, bevorzugt von -20°C bis + 120°C, besonders bevorzugt von unter - 20°C bis über 120 °C erstreckt.

12. System nach einem der vorangehenden Ansprüche 5 bis 11,
**dadurch gekennzeichnet,**
**dass** eine zumindest eine der Flachleitungen (2) umgebende Isolation (10) aus einem nichtleitenden Isoliermaterial gebildet ist, wobei dessen spezifische elektrische Leitfähigkeit zumindest weniger als 10⁻⁵ S·cm⁻¹, bevorzugt weniger als 10⁻¹⁰ S·cm⁻¹, besonders bevorzugt weniger als 10⁻¹⁵ S·cm⁻¹ beträgt, und/oder dass eine zumindest eine der Flachleitungen (2) umgebende Isolation (10) aus einem durchschlagsfesten Isoliermaterial gebildet ist, wobei dessen Durchschlagsfestigkeit zumindest mehr als 5 kV/mm, bevorzugt mehr als 20 kV/mm, besonders bevorzugt mehr als 50 kV/mm beträgt.

13. System nach einem der vorangehenden Ansprüche 5 bis 12,
**dadurch gekennzeichnet,**
**dass** eine zumindest eine der Flachleitungen (2) umgebende Isolation (10) aus einem Isoliermaterial mit einem Wasseraufnahmevermögen innerhalb von 24 h bei 23 °C nach DIN EN ISO 62 von weniger als 0,07 %, bevorzugt von weniger als 0,03 %, besonders bevorzugt von weniger als 0,01 % gebildet ist.

14. System nach einem der vorangehenden Ansprüche 5 bis 13,
**dadurch gekennzeichnet,**
**dass** eine zumindest eine der Flachleitungen (2) umgebende Isolation (10) aus einem Isoliermaterial mit einer Kriechstromfestigkeit entsprechend einem CTI-Wert von größer als 50 V, bevorzugt größer als 200 V, besonders bevorzugt größer als 400 V gebildet ist.

15. System nach einem der vorangehenden Ansprüche 5 bis 14,
**dadurch gekennzeichnet,**
**dass** zumindest eine der Flachleitungen (2) zusätzlich mit einer als Metallfolie, als Metallband, als Metallgeflecht oder als Metallbeschichtung ausgebildeten Schirmung (12) ummantelt ist.

## Claims

1. Multi-voltage on-board electrical system of a motor vehicle, comprising
- at least three flat cables (2a, b, c) extending substantially in parallel with one another in the longitudinal direction thereof, and
- at least two voltage sources (4, 6),
- wherein a first of the flat cables (2a) is connected in an electrically conductive manner to a first pole (4a) of a first of the voltage sources (4), a second of the flat cables (2b) is connected in an electrically conductive manner to a first pole (6a) of a second of the voltage sources (6), and a third of the flat cables (2c) is connected in an electrically conductive manner to a second pole (4b, 6b) of the first (4) and second voltage source (6),
- **characterised in that**
the third flat cable (2c) is arranged between at least the first (2a) and the second flat cable (2c).

2. System according to claim 1,
**characterised in that**
the first flat cable (2a) taps a higher electrical potential difference over the poles (4a, b) of the first voltage source (4) than the second flat cable (2b) taps over the poles (6a, b) of the second voltage source (6), the first flat cable (2a) preferably tapping an electrical potential difference of 24 V, more preferably an electrical potential difference of 48 V, whereas the second flat cable (2b) preferably taps an electrical potential difference of 12 V.

3. System according to any of the preceding claims, **characterised in that** in addition to the first flat cable (2a), the second flat cable (2b) and the third flat cable (2c), at least one additional flat cable (2d) which is connected in an electrically conductive manner to the first pole (8a) of a third voltage source (8), and/or one additional flat cable (2c') which is connected in an electrically conductive manner to the second pole (4b, 6b, 8b) of the first (4) and/or second (6) and/or third voltage source (8) is arranged.

4. System according to any of the preceding claims,
**characterised in that**
over the poles (4a, b) of the first voltage source (4), a different potential difference can be tapped to over the poles (6a, b) of the second voltage source (6) and/or over the poles (8a, b) of the third voltage source (8), in particular **in that** over the poles of all three voltage sources (4, 6, 8), a different potential difference can be tapped.

5. System of claim 1 with a multilayer cable (1)
**characterised in that**
at least one of the flat cables (2) is formed at least in part from aluminium or an alloy thereof, and/or **in that** least one of the flat cables (2) is formed at least in part from copper or an alloy thereof.

6. System according to claim 5,
**characterised in that**
at least one of the flat cables (2) has a substantially rectangular cross section, wherein in particular edges and/or corners of the flat cables (2) are rounded.

7. System according to any one of claims 5 or 6,
**characterised in that**
the distance between at least two of the flat cables (2) is at least 0.2 mm, preferably more than 1 mm.

8. System according to any one of claims 5 to 7,
**characterised in that**
the current-carrying capacity of at least one of the flat cables (2) is at least 50 A, preferably at least 100 A.

9. System according to any one of claims 5 to 8,
**characterised in that**
at least one of the flat cables (2) has a greater cable cross section than at least two of the other flat cables (2).

10. System according to any one of claims 5 to 9,
**characterised in that**
an insulation (10) surrounding the flat cables (2) is formed from a flexible, bending-resistant insulation material, wherein the bending resistance thereof, in accordance with DIN EN ISO 178, is at least 20 MPa, preferably more than 40 MPa, more preferably more than 60 MPa.

11. System according to any one of claims 5 to 10,
**characterised in that**
an insulation (10) surrounding at least one of the flat cables (2) is formed from a temperature-stable insulation material, wherein the permissible temperature range thereof extends from -10°C to +80°C, preferably from -20°C to +120°C, more preferably from below
-20°C to over 120°C.

12. System according to any one of claims 5 to 11,
**characterised in that**
an insulation (10) surrounding at least one of the flat cables (2) is formed from a non-conductive insulation material, wherein the specific electrical conductivity thereof is at least less than 10⁻⁵ S·cm⁻¹, preferably less than 10⁻¹⁰ S·cm⁻¹, more preferably less than 10⁻¹⁵ S·cm⁻¹ and/or an insulation (10) surrounding at least one of the flat cables (2) is formed from a breakdown-resistant insulation material, wherein the breakdown resistance thereof is at least more than 5 kV/mm, preferably more than 20 kV/mm, more preferably more than 50 kV/mm.

13. System according to any one of claims 5 to 12,
**characterised in that**
an insulation (10) surrounding at least one of the flat cables (2) is formed from an insulation material having a water absorbency within 24 hours at 23 °C, in accordance with DIN EN ISO 62, of less than 0.07%, preferably of less than 0.03%, more preferably of less than 0.01%.

14. System according to any one of claims 5 to 13,
**characterised in that**
an insulation (10) surrounding at least one of the flat cables (2) is formed from an insulation material having a tracking resistance according to a CTI value of greater than 50 V, preferably greater than 200 V, more preferably greater than 400 V.

15. System according to any one of claims 5 to 14,
**characterised in that**
at least one of the flat cables (2) is additionally encased by a shield (12) in the form of a metal foil, a metal strip, a metal braid or a metal coating.

## Revendications

1. Système de réseau de bord multitension d'un véhicule automobile, ledit système comprenant :
- au moins trois conducteurs plats (2 a, b, c) s'étendant, dans leur direction longitudinale, pratiquement de manière parallèle les uns aux autres,
- ainsi qu'au moins deux sources de tension (4, 6), où un premier des conducteurs plats (2a) est relié de manière électroconductrice à un premier pôle (4a) d'une première des sources de tension (4), un deuxième des conducteurs plats (2b) est relié de manière électroconductrice à un premier pôle (6a) d'une deuxième des sources de tension (6), et un troisième des conducteurs plats (2c) est relié de manière électroconductrice à un deuxième pôle (4b, 6b) de la première (4) et de la deuxième source de tension (6),
**caractérisé**
**en ce que** le troisième conducteur plat (2c) est disposé entre au moins le premier (2a) et le deuxième conducteur plat (2b).

2. Système selon la revendication 1,
**caractérisé**
**en ce que** le premier conducteur plat (2a), via les pôles (4a, b) de la première source de tension (4), détecte une différence de potentiel électrique plus élevée que le deuxième conducteur plat (2b) via les pôles (6a, b) de la deuxième source de tension (6), où le premier conducteur plat (2a) détecte de préférence une différence de potentiel électrique de 24 V, de façon particulièrement préférée une différence de potentiel électrique de 48 V, tandis que le deuxième conducteur plat (2b) détecte de préférence une différence de potentiel électrique de 12 V.

3. Système selon l'une des revendications précédentes,
**caractérisé**
**en ce que**, en plus du premier conducteur plat (2a), du deuxième conducteur plat (2b) et du troisième conducteur plat (2c), est disposé au moins un autre conducteur plat (2d) relié de manière électroconductrice au premier pôle (8a) d'une troisième source de tension (8) et/ou un autre conducteur plat (2c') relié de manière électroconductrice au deuxième pôle (4b, 6b, 8b) de la première (4) et/ou de la deuxième (6) et/ou de la troisième source de tension (8).

4. Système selon l'une quelconque des revendications précédentes,
**caractérisé**
**en ce qu'**une autre différence de potentiel peut être détectée via les pôles (4a, b) de la première source de tension (4), ladite différence de potentiel étant différente de celle pouvant être détectée via les pôles (6a, b) de la deuxième source de tension (6) et/ou via les pôles (8a, b) de la troisième source de tension (8), caractérisé en particulier en ce qu'une différence de potentiel différente l'une de l'autre peut être détectée via les pôles de la totalité des trois sources de tension (4, 6, 8).

5. Système selon la revendication 1, comprenant un câble multicouche (1),
**caractérisé**
**en ce qu'**au moins l'un des conducteurs plats (2) est formé en se composant au moins partiellement d'aluminium ou d'un alliage d'aluminium et/ou en ce qu'au moins l'un des conducteurs plats (2) est formé
en se composant au moins partiellement de cuivre ou d'un alliage de cuivre.

6. Système selon la revendication 5,
**caractérisé**
**en ce qu'**au moins l'un des conducteurs plats (2) présente une section pratiquement rectangulaire, où en particulier des bords et/ou des parties angulaires des conducteurs plats (2) sont arrondi(e)s.

7. Système selon l'une des revendications précédentes 5 ou 6,
**caractérisé**
**en ce que** la distance comprise entre au moins deux des conducteurs plats (2) est au moins de 0,2 mm, de préférence de plus de 1 mm.

8. Système selon l'une quelconque des revendications 5 à 7,
**caractérisé**
**en ce que** l'intensité admissible de courant au moins de l'un des conducteurs plats (2) est au moins de 50 A, de préférence au moins de 100 A.

9. Système selon l'une quelconque des revendications précédentes 5 à 8,
**caractérisé**
**en ce qu'**au moins l'un des conducteurs plats (2) présente une section de conducteur plus grande que celle au moins de deux des autres conducteurs plats (2).

10. Système selon l'une quelconque des revendications précédentes 5 à 9,
**caractérisé**
**en ce qu'**une isolation (10) entourant les conducteurs plats (2) est formée en se composant d'un matériau isolant flexible et résistant à la flexion, où la résistance à la flexion dudit matériau isolant est, selon la norme DIN EN ISO 178, au moins de 20 MPa, de préférence de plus de 40 MPa, de façon particulièrement préférée de plus de 60 MPa.

11. Système selon l'une quelconque des revendications précédentes 5 à 10,
**caractérisé**
**en ce qu'**une isolation (10) entourant au moins l'un des conducteurs plats (2) est formée en se composant d'un matériau isolant stable en température, où la plage de température admissible dudit matériau isolant varie entre - 10°C et + 80°C, de préférence entre - 20°C et + 120°C, de façon particulièrement préférée allant de moins de - 20°C à plus de + 120°C.

12. Système selon l'une quelconque des revendications précédentes 5 à 11,
**caractérisé**
**en ce qu'**une isolation (10) entourant au moins l'un des conducteurs plats (2) est formée en se composant d'un matériau isolant non conducteur, où la conductivité électrique spécifique dudit matériau isolant est au moins inférieure à 10⁻⁵ S·cm⁻¹, de préférence inférieure à 10⁻¹⁰ S·cm⁻¹, de façon particulière préférée inférieure à 10⁻¹⁵ S·cm⁻¹, et/ou en ce qu'une isolation (10) entourant au moins l'un des conducteurs plats (2) est formée en se composant d'un matériau isolant résistant au claquage, où la rigidité diélectrique dudit matériau isolant est au moins de plus de 5 kV/mm, de préférence de plus de 20 kV/mm, de façon particulièrement préférée de plus de 50 kV/mm.

13. Système selon l'une quelconque des revendications précédentes 5 à 12,
**caractérisé**
**en ce qu'**une isolation (10) entourant au moins l'un des conducteurs plats (2) est formée en ce se composant d'un matériau isolant ayant une capacité
d'absorption d'eau, dans un laps de temps de 24 h à 23°C, selon la norme DIN EN ISO 62, de moins de 0,07 %, de préférence de moins de 0,03 %, de façon particulièrement préférée de moins de 0,01 %.

14. Système selon l'une quelconque des revendications précédentes 5 à 13,
**caractérisé**
**en ce qu'**une isolation (10) entourant au moins l'un des conducteurs plats (2) est formée en se composant d'un matériau isolant ayant une résistance aux courants de fuite, résistance qui correspond à une valeur CTI supérieure à 50 V, de préférence supérieure à 200 V, de façon particulièrement préférée supérieure à 400 V.

15. Système selon l'une quelconque des revendications précédentes 5 à 14,
**caractérisé**
**en ce qu'**au moins l'un des conducteurs plats (2) est enveloppé en étant doté en outre d'un blindage (12) conçu comme une feuille métallique, comme une bande métallique, comme un treillis métallique, ou bien comme un revêtement métallique.
